# FASCICULE DE BREVET EUROPEEN

(11) **EP 1 118 557 B1**
(45) Date de publication et mention de la délivrance du brevet: **10.12.2008**
(21) Numéro de dépôt: 00403716.4
(22) Date de dépôt: 29.12.2000
(51) Int. Cl.: B65G 1/137, B65G 59/00

(54) **Dispositif de réception et d'éjection d'articles empilés dans un magasin et système de distribution automatique d'articles utilisant un certain nombre de tels dispositifs**
Vorrichtung zum Empfangen und Ausstossen von in Magazinen gestapelten Gegenständen und automatisches System für Gegenstände mit einer Anzahl solcher Vorrichtungen
Reception and ejection device for articles stacked in a store and automatic delevery system for articles using a number of such devices

(30) Priorité: 21.01.2000 FR 0000784
(43) Date de publication de la demande: 25.07.2001
(73) Titulaire: Société Nationale d'Exploitation Industrielle des Tabacs et Allumettes S.E.I.T.A., 75007 Paris (FR)
(72) Inventeur: Gouy, Jean-Claude, 69009 Lyon (FR); Guyard, Jean-Arnaud, 78000 Versailles (FR)
(74) Mandataire: Thinat, Michel

(56) Documents cités:
- EP-A- 0 816 267
- US-A- 5 785 489

## Description

La présente invention concerne un dispositif de réception et d'éjection d'articles empilés dans un magasin, ainsi qu'un système de distribution automatique d'articles pour la préparation de commandes utilisant un certain nombre de tels dispositifs.

On connaît par le document EP 0 816 267 au nom de la demanderesse un dispositif d'éjection d'articles empilés dans un magasin sensiblement vertical et qui comprend un éjecteur situé sous le magasin de façon à éjecter de celui-ci chaque article le plus bas de la pile d'articles.

On connaît aussi le document US-A-5 785 489 qui décrit un dispositif suivant le préambule de la revendication 1.

L'alimentation en piles d'articles des différents magasins associés respectivement aux dispositifs d'éjection s'effectue par des voies de roulement inclinées de haut en bas vers le magasin correspondant de façon à diriger les piles successives d'articles par glissement sur chaque voies de roulement vers une paroi mobile du magasin pour permettre le rechargement automatique de celui-ci.

Cette paroi mobile est montée coulissante de façon commandée sur deux axes fixes horizontaux de guidage situés dans un même plan horizontal au-dessus du magasin en s'étendant transversalement à la paroi de chaque magasin, de sorte que la paroi mobile peut se déplacer suivant une direction perpendiculaire à la paroi latérale fixe du magasin à une position de réception d'une nouvelle pile d'articles et retourner vers sa position de formation du magasin en transférant la nouvelle pile d'articles dans ce magasin.

Cette solution connue a pour inconvénient que le transfert d'une pile d'articles dans le magasin est relativement lent à cause de la masse relativement importante de la paroi mobile du magasin et nécessite les axes ou barres horizontales supérieures de coulissement de la plaque mobile qui rendent peu aisé le démontage de cette plaque.

La présente invention a pour but d'éliminer les inconvénients ci-dessus en proposant un dispositif de réception et d'éjection d'articles empilés dans un magasin suivant la revendication 1.

Le mécanisme d'entraînement comprend un bras horizontal monté pivotant à une extrémité autour d'un axe vertical et comportant au voisinage de son extrémité libre opposée la barre de transfert s'étendant verticalement vers la base de support d'une hauteur supérieure à la hauteur d'une pile d'articles à transférer.

De préférence le bras pivotant est entraîné par un vérin hydraulique ou pneumatique à double effet.

La pièce formant butée comprend deux bras jumelés parallèles à la base de support et ayant deux de leurs extrémités montées pivotantes autour de l'axe vertical, l'extrémité opposée du bras inférieur étant reliée à un organe de commande du pivotement des deux bras jumelés entre la position active à laquelle une pile d'articles est en appui sur deux bords rectilignes situés d'un même côté des deux bras jumelés et une position inactive à laquelle les deux bords rectilignes des deux bras jumelés sont désengagés de la pile d'articles avant son transfert vers le magasin.

L'organe de commande du pivotement de la pièce formant butée est un vérin dont la tige est reliée articulée à l'extrémité du bras inférieur et le cylindre est fixé à une embase solidaire de la base de support, l'axe de pivotement des deux bras jumelés étant fixé à l'embase à l'opposé de la tige de vérin.

Les deux bras jumelés sont chacun en forme de plaques planes courbées et de section rectangulaire, de façon que la partie convexe de chaque bras soit en regard d'une pile d'articles, les bords rectilignes des deux bras servant d'appui à une pile d'articles étant ceux opposés à l'axe d'articulation.

Le dispositif comprend de plus une paroi verticale arquée fixée à la base de support et dont la face concave tournée vers la barre de transfert permet le guidage suivant la trajectoire arquée d'une pile d'articles vers le magasin.

La paroi verticale arquée est prolongée par une paroi verticale plane définissant l'une des parois du magasin de réception d'une pile d'articles, l'autre paroi du magasin étant définie par une plaque verticale parallèle à la paroi plane et espacée de cette dernière d'une distance sensiblement égale à la largeur de chaque article d'une même pile, la base de support comprenant une ouverture située entre les deux parois du magasin et à travers laquelle une partie des articles d'une pile d'articles chute par gravité une fois la pile transférée dans le magasin, de façon que l'article le plus bas repose sur l'éjecteur qui peut être commandé par exemple par un vérin, pour éjecter cet article le plus bas.

La plaque verticale définissant l'autre paroi du magasin comprend une ailette verticale fixée perpendiculairement à la plaque verticale dans le magasin et constituant une butée d'arrêt et de positionnement d'une pile d'articles relativement à l'ouverture de passage au travers celle-ci des articles d'une pile.

Le dispositif comprend une cornière verticale située en face de la paroi verticale du magasin prolongeant la paroi verticale arquée de guidage et montée pivotante relativement à la base de support autour d'un axe vertical entre une position dégagée permettant le transfert d'une pile d'articles dans le magasin et une position d'engagement avec le coin de la pile d'articles situé du même côté que celui en appui sur l'ailette de butée de façon à maintenir la pile d'articles en position centrée dans le magasin relativement à l'ouverture de passage des articles de la pile.

La cornière verticale est fixée, au niveau de sa partie médiane, à l'extrémité d'un bras parallèle à la base du support, le bras étant fixé sur l'extrémité supérieure d'un pied vertical de support dont l'extrémité inférieure est solidaire d'une plaque parallèle au bras de la cornière, l'ensemble constitué par le bras, le pied de support et la plaque étant monté pivotant sur un arbre vertical opposé à la cornière et solidaire de la base du support.

Le pivotement de la cornière verticale est commandé par un vérin dont la tige est reliée articulée à la plaque de support du pied vertical et le cylindre est fixé articulé à la base du support.

Les deux parois verticales du magasin sont réglables en position l'une par rapport à l'autre sur la base du support suivant la dimension des articles à éjecter d'une pile.

L'invention propose également un système de distribution automatique d'articles pour la préparation d'une ou plusieurs commandes de tels articles, comprenant un certain nombre de dispositifs de réception et d'éjection d'articles empilés dans des magasins de ces dispositifs, qui comprennent des éjecteurs situés respectivement sous les magasins pour éjecter de chaque magasin chaque article le plus bas d'une pile correspondante d'articles et un convoyeur disposé sous les dispositifs de réception et d'éjection pour collecter les articles délivrés par les éjecteurs et les acheminer vers un emplacement de collecte et qui est caractérisé en ce que chaque dispositif de réception et d'éjection d'articles empilés est tel que défini précédemment.

Les dispositifs de réception et d'éjection sont constitués par des modules amoviblement fixés côte à côte de façon interchangeable sur un châssis d'une chaîne de modules.

Le système comprend en outre plusieurs tapis roulants horizontaux en forme de bandes sans fin permettant d'alimenter en articles empilés respectivement les dispositifs de réception et d'éjection de façon que chaque tapis roulant d'alimentation achemine une succession de piles d'articles identiques constituant une réserve d'articles empilés dont la pile de tête vient en appui sur la pièce formant butée du dispositif de réception et d'éjection correspondant, le déplacement du tapis roulant d'alimentation étant interrompu lors du transfert d'une pile d'articles dans le magasin du dispositif de réception et d'éjection.

Le système comprend un dispositif ordinateur permettant de sélectivement commander les dispositifs de réception et d'éjection par l'intermédiaire de cartes électroniques associées respectivement à ces dispositifs pour éjecter des magasins correspondants des quantités déterminées d'articles souhaités suivant des commandes passées et mémorisées dans le dispositif ordinateur.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple, illustrant plusieurs modes de réalisation de l'invention, et dans lesquels :
- La figure 1 est une vue en perspective représentant sous forme de module le dispositif de réception et d'éjection d'articles empilés dans un magasin conforme à l'invention ;
- La figure 2 est une vue de dessous en perspective suivant la flèche II de la figure 1.
- La figure 3 est une vue de dessus suivant la flèche III de la figure 1 ;
- La figure 4 est une vue de face suivant la flèche IV de la figure 1 ;
- La figure 5 est une vue en coupe suivant la ligne V-V de la figure 4 ;
- La figure 6 est une vue schématique simplifiée représentant l'alimentation en piles d'articles du dispositif de l'invention ;
- La figure 7 est une vue schématique de dessus du dispositif de l'invention représentant le transfert de piles d'articles dans le magasin du dispositif ;
- La figure 8 est une vue de face d'une pile d'articles dans un magasin avec l'article le plus bas de la pile reposant sur un éjecteur et montrant deux capteurs de détection du magasin vide et de présence de l'article le plus bas de la pile ; et
- La figure 9 représente la direction du faisceau du détecteur relativement à un article le plus bas d'une pile contenue dans un magasin.

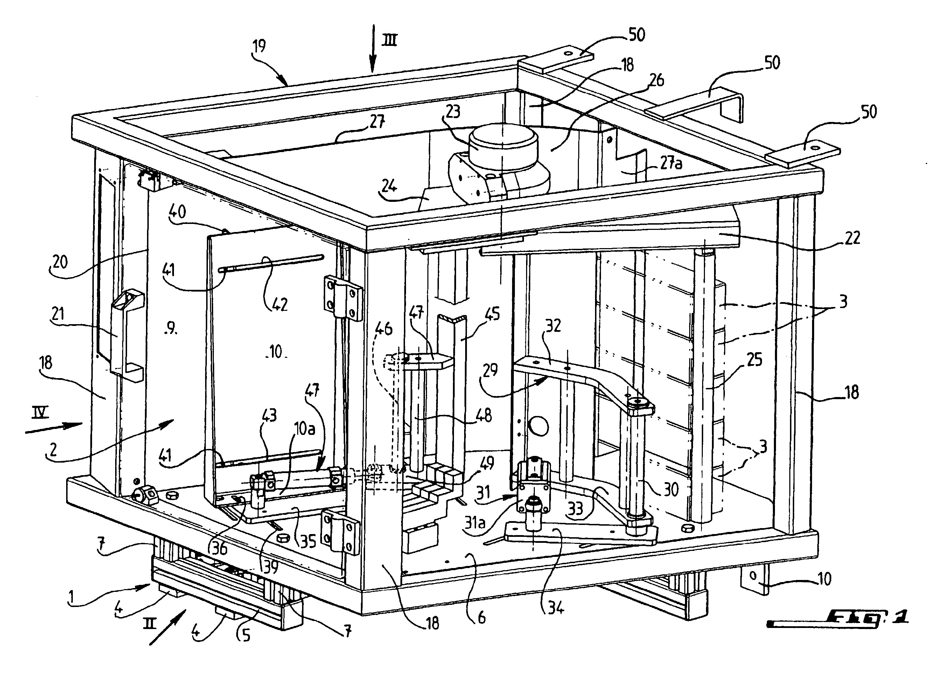

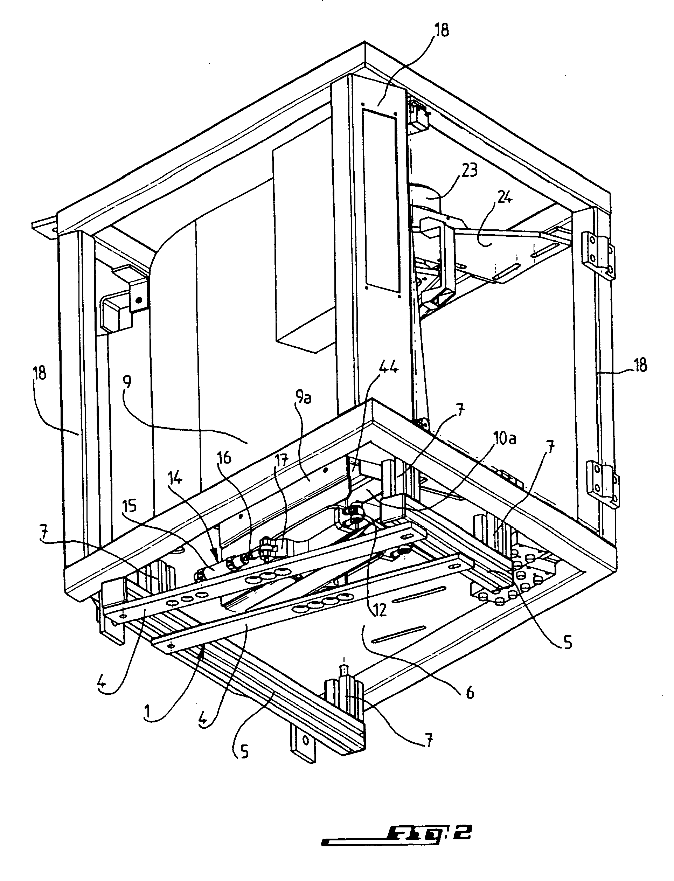

Les figures 1 à 5 représentent sous forme de module un dispositif de réception et d'éjection d'articles empilés dans un magasin de celui-ci et faisant partie d'une série horizontale de modules d'un système de distribution automatique d'articles empilés dans les magasins des modules pour la préparation de commandes de tels articles, par exemple par des clients.

Dans le cas présent, ces articles sont constitués par des emballages ou cartouches sensiblement parallèpipédiques de paquets de cigarettes, mais bien entendu ils peuvent également être constitués par des boîtes ou des coffrets de cigares, de boîtiers à cassettes audio, des boîtiers à compact-disques, ou analogues.

Chaque dispositif de réception et d'éjection comprend ainsi un éjecteur 1 situé sous le magasin 2, qui sera défini ultérieurement, dans lequel sont transférées successivement des piles d'articles 3 pour éjecter de façon commandée et périodiquement l'article le plus bas de la pile sur un convoyeur (non représenté) situé en dessous de l'éjecteur 1.

L'éjecteur 1 est connu en soit et est décrit de façon détaillée dans la demande de brevet européen n° 0 816 267 déposée au nom de la demanderesse.

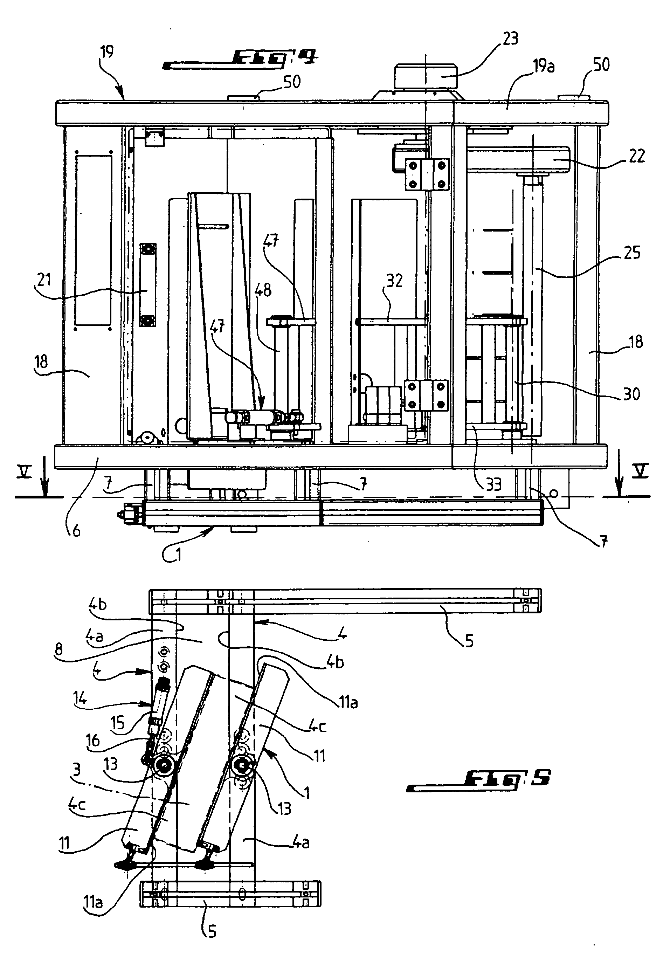

Plus précisément, l'éjecteur 1 comprend un support fixe de l'article le plus bas 3 d'une pile et constitué par deux bras rectilignes parallèles sensiblement de même longueur 4 fixés sous deux traverses parallèles 5 s'étendant perpendiculairement aux deux bras 4, les deux traverses 5 étant fixées sous une base 6 formant le fond du module constituant le dispositif de réception d'éjection, par l'intermédiaire de pieds de fixation 7. Les deux bras 4 ont leurs faces supérieures planes respectives 4a situées dans un même plan horizontal de façon à constituer une surface plane de support de l'article 3 le plus bas. Les faces latérales verticales internes mutuellement en regard 4b des deux bras 4 définissent respectivement deux bords rectilignes parallèles opposés d'une ouverture centrale 8 d'une largeur déterminée par la distance séparant les deux bras 4 et d'une étendue supérieure à la projection apparente horizontale des articles 3 empilés dans le magasin 2. De la sorte, l'ouverture 8 définie entre les deux bras 4 est disposée obliquement relativement aux articles empilés 3. L'article le plus bas 3 repose sur deux portions de surface plane 4c (figure 5) diagonalement opposées respectivement des deux bras 4. Les deux bras de support 4 sont situés en dessous du magasin 2 à une distance de celui-ci telle que l'article le plus bas 3 en appui sur les bras 4 soit complètement sorti du magasin 2 et les articles 3 empilés au dessus de l'article le plus bas sont bilatéralement maintenus par les deux parois latérales 9, 10 du magasin 2 de façon à empêcher tout pivotement autour d'eux-mêmes des articles empilés sur l'article le plus bas lors de l'éjection de ce dernier.

L'éjecteur 1 comprend également un mécanisme de commande du pivotement sur lui-même de l'article le plus bas 3 à partir de sa position de repos sur les deux portions de surface plane 4c des bras de support 4 à une position parallèle aux deux faces latérales verticales 4b de ces bras de façon à faire tomber par gravité cet article à travers l'ouverture centrale 8.

Ce mécanisme de commande comprend deux barres longitudinales parallèles sensiblement de même longueur 11 reliées entre elles de façon articulée à leurs extrémités opposées à la face avant du module par une biellette 12 afin de constituer un parallélogramme déformable dont seul l'un des côtés opposé à la biellette 12 est manquant.

Les deux barres 11 sont montées pivotantes respectivement sur les deux bras 4 par un axe de pivotement 13 solidaire du bras correspondant 4 perpendiculairement à celui-ci, les deux axes 13 étant situés au même emplacement sur les deux barres 11.

Le mécanisme de commande comprend en outre un vérin hydraulique ou pneumatique à double effet 14 dont le cylindre 15 est fixé de façon articulée à l'un des bras 4 et la tige de commande 16 est reliée articulée à une extension 17 de la barre pivotante correspondante 11.

Le vérin de commande 14 est piloté de manière que la tige 16 occupe normalement une position rentrée dans le cylindre 15 de façon que les deux barres pivotantes 11 soient disposées obliquement aux barres 4 comme représenté en figure 5 et laissent ainsi découvertes les deux portions de surface plane 4c des deux bras 4 du support de l'article le plus bas 3. A cette position, les faces latérales verticales internes mutuellement en regard 11a de ces barres sont situées de part et d'autre, avec jeu, de l'article le plus bas 3 en faisant face chacune à la paroi latérale correspondante de cet article reposant sur les deux bras de support 4.

Lorsque que le vérin 14 est piloté de façon que la tige de commande 16 soit sortie du cylindre 15, les deux barres 11 pivotent pour être disposées parallèlement aux deux bras 4 au dessus de ceux-ci avec leurs faces latérales verticales 11a respectivement en affleurement aligné avec la face latérale verticale 4b des deux bras 4 pour permettre la chute par gravité de l'article le plus bas à travers l'ouverture centrale 8.

Le fonctionnement complet de l'éjecteur 1 est décrit de façon détaillée dans la demande de brevet européen n° 0 816 267 à laquelle il suffit de se reporter.

Le module du dispositif de réception et d'éjection comprend un châssis constitué de quatre montants 18 solidaires de la base 6 en étant disposés au quatre coins de celle-ci et un cadre en losange 19 fixé sur les quatre montants 18. La face arrière et les deux faces latérales du châssis sont constituées par des parois en matériau transparent tel que du verre, tandis que la paroi avant comprend une porte 20 également en matériau transparent, tel que du verre, montée articulée autour d'une articulation verticale à l'un des deux montants avant 18, la porte 20 comportant une poignée de manoeuvre 21.

Dans le module ainsi défini, se trouvent le magasin 2 ainsi que les différents moyens permettant d'effectuer le transfert, successivement, des piles d'articles 3 d'un emplacement en attente dans le module au magasin 2.

Les moyens de transfert comprennent un bras 22 parallèle à la base 6 et monté pivotant à une extrémité autour d'un axe vertical sous la commande d'un vérin rotatif 23 fixé à une console 24 solidaire de l'un 19a des longerons du cadre 19.

Le bras pivotant 22 comprend, solidaire de son extrémité libre opposée au vérin 23, une barre verticale de transfert 25 s'étendant jusqu'à la base 6 avec un espace relativement faible entre son extrémité libre et la base 6. La barre 25 a une hauteur supérieure à la hauteur d'une pile d'articles.

Le bras 22 et la barre 25 occupe une position de repos inactive représentée notamment aux figurés 1 et 3 et lorsque le vérin 23 est piloté, le bras 22 pivote dans un sens permettant à la barre 25 de venir en contact simultanément sur les extrémités en bout des articles empilés 3 et d'exercer sur la pile une poussée provoquant le glissement de la pile sur la base de support 6 suivant une trajectoire arquée de façon guidée par une paroi verticale curviligne 26 fixée sur la base 6 en prolongement d'une paroi verticale plane 27 s'étendant, avec la paroi 26 sur toute la longueur d'un longeron 19a à l'opposé du longeron 19a supportant le vérin 23. La paroi 9 définissant le magasin 2 est définie par une partie de la paroi 27.

L'extrémité de la paroi curviligne 26 opposée à la paroi 27 est recourbée vers l'extérieur de façon à permettre le passage de piles d'articles 3, provenant d'un tapis roulant d'alimentation 28 situé à l'opposé de la face avant du module successivement sur la base 6 au fur et à mesure que chaque pile d'articles 3 se trouvant sur la base 6 est transférée, suivant sa longueur, dans le magasin 2 par le bras 22 et la barre verticale 25, le tapis roulant se trouvant au même niveau que la base 6.

La partie concave de la paroi curviligne 26 se trouve face à chaque pile d'articles 3 à transférer dans le magasin 2, de sorte que lorsque le bras 22 est pivoté pour déplacer, par poussée par la barre 25, une pile d'articles 3 se trouvant en attente sur son trajet, le coin extrême de la pile opposé à la barre 25 se trouvant du côté de la paroi 26 vient en contact sur la partie concave de celle-ci pour y être guidé jusqu'au magasin 2.

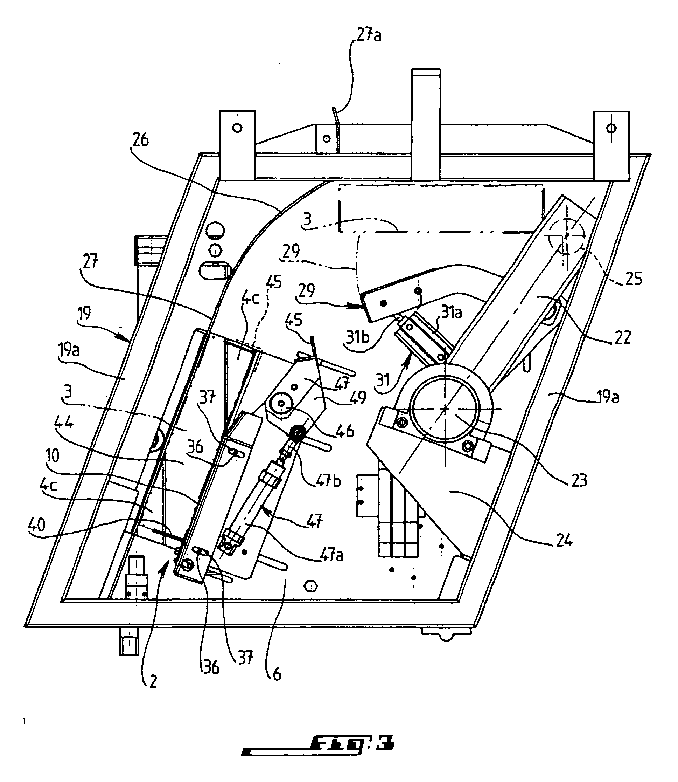

Une pièce 29 formant butée de retenue d'une pile d'articles 3 provenant du tapis d'alimentation 28 est montée pivotante sur la base du support 6 autour d'un axe vertical 30. La pièce formant butée 29 pivote autour de l'axe 30 sous la commande d'un vérin double effet pneumatique ou hydraulique 31 entre une position active à laquelle une pile d'articles 3 à transférer se trouve en appui sur la pièce formant butée 29 et se trouve sur le trajet de transfert de la pile par le bras 22 et la barre 25 et une position inactive dégagée de la pile d'articles 3 représentée en trait fort en figure 3, pendant l'opération de transfert de cette pile vers le magasin 2.

La pièce formant butée 29 comprend deux bras jumelés 32, 33 parallèles à la base de support 6 et ayant deux de leurs extrémités situées d'un même côté montées pivotantes sur l'axe 30, dont l'extrémité inférieure est solidaire d'une embase de support 34 fixée sur la base 6.

Le vérin de commande 31 a son corps de cylindre 31a fixé de façon articulée à l'embase 34 et sa tige 32a reliée de façon articulée à l'extrémité libre du bras inférieur 33 opposé à l'axe de pivotement 30.

Chaque bras 32, 33 est en forme de plaque plane courbée de section transversale rectangulaire avec la partie convexe du bras située au milieu de celui-ci tournée vers la pile d'articles 3 de façon qu'en position active de retenue de la pièce 29, la pile d'articles 3 soit en appui, par deux des articles espacés de la même distance que les bras 32, 33, respectivement sur les deux bords frontaux des deux bras 32, 33 opposés à l'axe 30.

La paroi 10 du magasin 2 est constituée par une plaque rigide verticale pouvant être fixée relativement à la paroi fixe 9 du magasin à une position relative à cette dernière d'une distance légèrement supérieure à la largeur des articles 3 d'une pile. La plaque 10 est située sur une embase de support 35 par l'intermédiaire de vis de fixation 36 traversant des lumières 37 réalisées dans un rebord inférieur 10a perpendiculaire à la plaque 10, de façon à fixer la paroi 10 relativement à la paroi 9 suivant la largeur d'une pile d'articles 3. L'embase 35 est également fixée sur la base de support 6 par des vis 38 traversant l'embase 35 et deux trous oblongs 39 perpendiculaires à la paroi 9 de façon à régler la position de l'embase à une position relative à la paroi 9 suivant les dimensions plus ou moins importantes en largeur des articles d'une pile et qui ne peut être réglée par la paroi seule 19.

La paroi 10 comporte, sur sa face dirigée vers la paroi 9, une ailette verticale 40 fixée perpendiculairement à la paroi 10 par des vis de fixation 41 traversant deux lumières horizontales respectivement supérieure 42 et inférieure 43 de la paroi 10. L'ailette 40 peut ainsi être réglée à une position relative à la paroi 10 et fait office de butée d'arrêt et de positionnement d'une pile d'articles 3, transférée dans le magasin 2 par le bras 22 et la barre 25, relativement à une ouverture rectangulaire 44 réalisée à travers la base de support 6 au-dessus de l'ouverture définie entre les deux barres pivotantes 11 pour permettre le passage de l'article le plus bas d'une pile dans le magasin 2 et sa dépose sur les deux bras de support 4. Bien entendu, l'ouverture 44 de passage d'articles d'une pile est de dimension légèrement supérieure à celle d'un article. Les deux parois 9 et 10 du magasin sont prolongées par des parois inférieures respectivement 9a, 10a traversant le passage 44 en faisant saillie en dessous de celui-ci jusqu'à une hauteur permettant à l'article le plus bas d'une pile de reposer sur les deux bras de support 4 en dehors des parois de prolongement 9a, 10a et avec l'article 3 situé juste au dessus de l'article le plus bas situé entre les deux prolongements de parois 9a, 10a pour empêcher une rotation de celui-ci autour de son axe de géométrie lorsque l'article le plus bas est pivoté par les deux barres 11 d'une valeur d'angle permettant la chute par gravité de l'article le plus bas 3 au travers de l'ouverture 8.

Le module comprend également à l'intérieur de celui-ci une cornière verticale 45 se trouvant en regard de la paroi verticale 27 et montée pivotante relativement à la base de support 6 autour d'un axe vertical 46 sous la commande d'un vérin à double effet pneumatique ou hydraulique 47 entre une position dégagée représentée en trait fort en figure 3 permettant le passage d'une pile d'articles, lors du transfert de celle-ci dans le magasin 2 et une position représentée en pointillés sur cette même figure d'engagement avec le coin de la pile d'articles situé du même côté que celui en appui sur l'ailette de butée 40 une fois la pile d'articles transférée dans le magasin 2, de façon à maintenir cette pile en position centrée dans le magasin 2 relativement à l'ouverture de passage 44 des articles de la pile vers l'éjecteur 1.

La cornière 45 est fixée, au niveau de sa partie médiane, à l'extrémité d'un bras en forme de plaque 47 parallèle à la base du support 6 et qui est fixée sur l'extrémité supérieure d'un pied vertical de support 48 dont l'extrémité inférieure est solidaire d'une plaque de support parallèle au bras 47 de façon que l'ensemble constitué par le bras 47, le pied du support 48 et la plaque 49 pivote autour de l'axe 46 constitué par un arbre à l'opposé de la cornière 45 et solidaire de la base du support 6.

Le vérin 47 de commande du pivotement de la cornière 45 a son corps de cylindre 47a fixé de façon articulée sur l'embase 35 et sa tige 47b fixée de façon articulée à la plaque pivotante 49.

Le module constituant le dispositif de réception et d'éjection comprend un certain nombre de pattes de fixation 50 permettant de fixer amoviblement le module à des rails ou des longerons d'une chaîne de modules disposés côte à côte.

Le système ainsi constitué de plusieurs modules indépendants d'une chaîne comprend plusieurs tapis roulants horizontaux 28 en forme de bandes sans fin permettant d'alimenter en articles empilés 3 respectivement les dispositifs de réception et d'éjection de façon que chaque tapis roulant d'alimentation 28 achemine une succession de piles d'articles identiques constituant une réserve d'articles empilés, dont la pile de tête vient en appui sur la pièce formant butée 29 du dispositif de réception d'éjection correspondant, le moteur 51 d'entraînement du tapis 28 étant alors coupé pour arrêter le déplacement de ce tapis pendant le transfert d'une pile d'articles 3 se trouvant dans le dispositif de réception et d'éjection et une fois la pile d'articles transférée dans le magasin 2 de ce dispositif, l'alimentation du moteur 51 est reprise pour entraîner le tapi 28 de façon à placer une nouvelle pile d'articles sur la pièce formant butée 29 ramenée à sa position de service.

Le fonctionnement du système est régi par un dispositif ordinateur permettant une distribution automatique d'articles pour la préparation d'une ou plusieurs commandes de tels articles en commandant sélectivement les éjecteurs des dispositifs de réception et d'éjection par l'intermédiaire de cartes électroniques (non représentées) associées respectivement aux dispositifs de réception et d'éjection pour éjecter des magasins correspondants des quantités déterminées d'articles souhaités suivant les commandes passées et mémorisées dans le dispositif ordinateur.

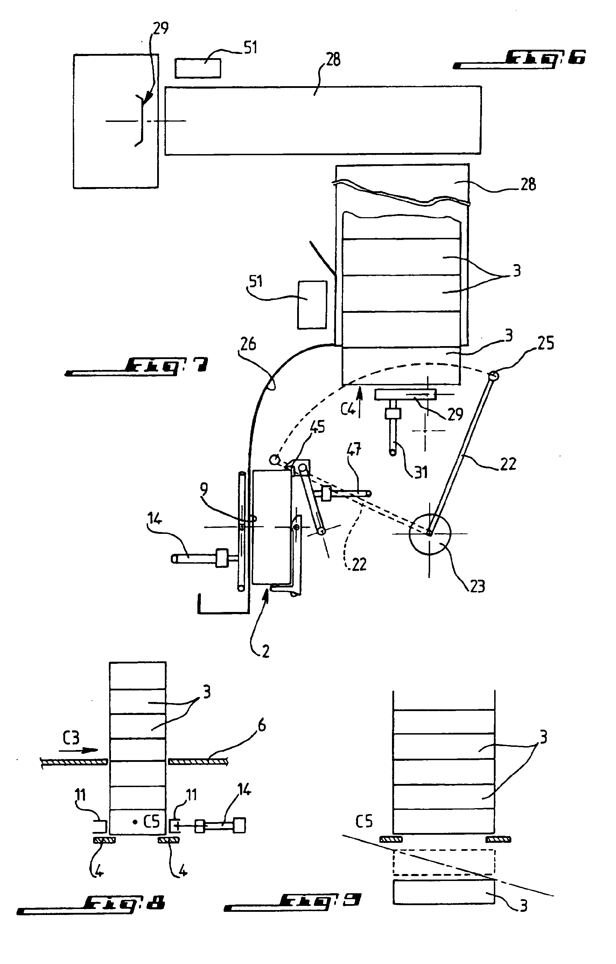

Le dispositif ordinateur reçoit également des signaux de différentes cellules C1, C2, C3, C4 et C5 représentées schématiquement aux figures 6 à 9 pour assurer les cycles de fonctionnement qui suivent.

En ce qui concerne tout d'abord le fonctionnement de chaque tapis roulant 28, le moteur 51 est alimenté pour entraîner le tapis 28 lorsqu'il n'y a plus de pile d'articles sur celui-ci et qu'aucune opération de dépilage d'une pile d'articles dans le magasin est en cours. Le tapis est entraîné jusqu'à ce qu'il y ait une pile d'articles devant la cellule C4 qui déclenche une temporisation de façon à continuer l'entraînement pendant une période déterminée du tapis 28 pour tasser les piles les unes contre les autres, comme représenté en figure 7.

Quand un opérateur approvisionne le tapis 28 en piles d'articles à l'extrémité de celui-ci opposée à la pièce formant butée 29, la cellule C1 située à cette extrémité du tapis et dont le faisceau de détection est dirigé perpendiculairement à l'axe longitudinal du tapis, fournit au dispositif ordinateur un signal commandant le moteur d'entraînement du tapis qui est déplacé tant que la cellule C1 est occultée et que la cellule C4 n'a pas détecté une opération de transfert d'une pile d'articles dans le magasin 2. La cellule C2, située à côté de la cellule C1 et dont le faisceau de détection est dirigé obliquement à l'axe longitudinal du tapis 28, sert au comptage des piles d'articles.

Le système ordinateur régit également le fonctionnement du système en ce qui concerne les cycles de réapprovisionnement de chaque magasin d'un dispositif de réception et d'éjection et le cycle de dépilage d'une pile d'articles présente dans le magasin.

Pour effectuer le cycle de réapprovisionnement du magasin 2 d'un dispositif, le dispositif ordinateur commande les vérins 31 et 47 de manière à amener en position escamotée la pièce formant butée 29 et la cornière 45, puis le vérin 23 est piloté pour déplacer le bras 22 et la barre verticale 25 de la position en trait fort⁻ à la position en pointillés comme représenté en figure 7. Quand le bras 22 occupe la position en pointillés, le vérin 23 est commandé pour ramener le bras à la position en trait fort et les vérins 29 et 47 sont pilotés pour amener la pièce formant butée 29 et la cornière 45 en position de service. Le dispositif ordinateur reçoit un signal de la cellule C3 indiquant qu'une pile d'articles est présente dans le magasin 2. Lorsque le bras 22 occupe la position en trait fort, le dispositif ordinateur commande le moteur 51 pour entraîner le tapis 28 d'alimentation en pile d'articles de façon qu'une pile d'articles vienne buter contre la pièce 29, condition détectée par la cellule C4.

Lors du cycle de dépilage des articles dans le magasin 2, le dispositif ordinateur actionne le vérin 14 pour commander le mécanisme d'éjection et faire tomber un par un les articles commandés, tant que la cellule C3 est occultée par un article de la pile indiquant la présence d'un tel article.

A chaque fois que l'éjecteur est actionné pour distribuer des articles, la cellule C3 est testée et comme on connaît à l'avance le nombre d'articles par pile, le cellule C3 permet de fournir au fur et à mesure que l'on éjecte des articles, le nombre d'articles restant dans la pile. Le magasin 2 est alors réapprovisionné quand le capteur a détecté qu'il ne reste plus qu'un produit d'une pile.

Ainsi, la cellule C3 permet de contrôler d'éventuelles erreurs pendant la distribution d'articles sur le tapis de collecte, à savoir si un article en trop a été distribué ou qu'il y a un article en moins de distribuer.

En outre, la cellule C5, qui commande le vérin 14, est positionnée en étant inclinée vers le bas comme représenté en figure 9 de façon à cadencer l'éjecteur des articles d'une pile en fonction de la hauteur de l'article.

Par exemple, dans le cas où la hauteur d'un article d'une pile serait inférieure à la hauteur d'un article d'une autre pile, le vérin 14 de l'éjecteur serait actionné à une cadence plus rapide.

Le dispositif de réception et d'éjection d'articles empilés de l'invention permet une éjection rapide des articles sur un tapis de collecte à l'aide de moyens simples et fiables et d'une cinématique peu complexe. En outre, les différents modules constituant ces dispositifs forment des ensembles mécaniquement indépendants fixés sur le châssis de la chaîne et pouvant être échangés très facilement avec la possibilité d'effectuer des réglages appropriés dans chaque module, tenant compte par exemple de la dimension des articles d'une pile, puis de monter chaque module sur la chaîne.

## Revendications

1. Dispositif de réception et d'éjection d'articles empilés (3) dans un magasin (2), comprenant un éjecteur (1) situé sous le magasin (2) et commandé de façon à éjecter du magasin (2) chaque article le plus bas de la pile d'articles, le dispositif comprenant en outre une barre (25) reliée à un mécanisme d'entraînement commandé de façon à amener la barre (25) à exercer un mouvement de poussée sur une extrémité d'une pile d'articles en attente à une position de stockage sur une base de support plane et horizontale (6) pour transférer la pile d'articles (3) vers le magasin (2) suivant une trajectoire arquée de guidage, **caractérisé en ce qu'**il comprend une pièce formant butée (29) de retenue d'une pile d'articles (3) en position d'attente de transfert, montée pivotante sur la base de support (6) autour d'un axe vertical (30) entre une position active de retenue de la pile d'articles (3) et une position inactive dégagée de la pile d'articles (3) pendant le transfert par la barre de transfert (25) de la pile d'articles vers le magasin (2), une nouvelle pile d'articles (3) étant acheminée sur la pièce formant butée (29) après que cette dernière a été ramenée à sa position active.

2. Dispositif selon la revendication 1, **caractérisé en ce que** le mécanisme d'entraînement précité comprend un bras horizontal (22) pivotant à une extrémité autour d'un axe vertical et comportant au voisinage de son extrémité libre opposée la barre de transfert (25) s'étendant verticalement vers la base de support (6) d'une hauteur supérieure à la hauteur d'une pile d'articles (3) à transférer.

3. Dispositif selon la revendication 2, **caractérisé en ce que** le bras pivotant (22) est entraîné par un vérin rotatif hydraulique ou pneumatique (23) à double effet

4. Dispositif selon l'une des revendications précédentes, **caractérisé en ce que** la pièce formant butée (29) comprend deux bras jumelés (32, 33) parallèles à la base de support (6), et ayant deux de leurs extrémités montées pivotantes autour de l'axe vertical (25), l'extrémité opposée du bras inférieur (33) étant reliée à un organe de commande du pivotement des deux bras jumelés (32, 33) entre la position active à laquelle une pile d'articles est en appui sur deux bords rectilignes situés d'un même côté des deux bras jumelés (32, 33) et une position inactive à laquelle les deux bords rectilignes des deux bras jumelés (32, 33) sont désengagés de la pile d'articles avant son transfert vers le magasin (2).

5. Dispositif selon la revendication 4, **caractérisé en ce que** organe de commande de pivotement de la pièce formant butée (29) est un vérin (31) dont la tige (31b) est reliée articulée à l'extrémité du bras inférieur (33) et le cylindre (31a) est fixé à une embase (34) solidaire de la base du support (6), l'axe de pivotement (30) des deux bras jumelés (32, 33) étant fixé à l'embase (33) à l'opposé de la tige de vérin (31b).

6. Dispositif selon la revendication 4 ou 5, **caractérisé en ce que** les deux bras jumelés (32, 33) sont chacun en forme de plaque plane courbée et de section rectangulaire, de façon que la partie convexe de chaque bras soit en regard d'une pile d'articles (3), les bords rectilignes des deux bras servant d'appui à une pile d'articles étant ceux opposés à l'axe d'articulation (30).

7. Dispositif selon l'une des revendications précédentes, **caractérisé en ce qu'**il comprend une paroi verticale arquée (26) fixée à la base du support (6) et dont la face concave tournée vers la barre de transfert (25) permet le guidage suivant une trajectoire arquée d'une pile d'articles (3) vers le magasin (2).

8. Dispositif selon la revendication 7, **caractérisé en ce que** la paroi verticale arquée (26) est prolongée par une paroi verticale plane (27) définissant l'une des parois (9, 10) du magasin (2) de réception d'une pile d'articles (3), l'autre paroi (10) du magasin (2) étant définie par une plaque verticale parallèle à la paroi plane (9) et espacée de cette dernière d'une distance sensiblement égale à la largeur de chaque article (3) d'une même pile, la base de support (6) comprenant une ouverture (44) située entre les deux parois (9, 10) du magasin (2) et à travers laquelle une partie des articles d'une pile d'articles chute par gravité une fois la pile transférée dans le magasin (2), de façon que l'article le plus bas repose sur l'éjecteur (1) qui peut être commandé pour éjecter cet article le plus bas (3).

9. Dispositif selon la revendication 8, **caractérisé en ce que** le plaque verticale (10) définissant l'autre paroi du magasin (2) comprend une ailette verticale (40) fixée perpendiculairement à la plaque verticale dans le magasin (2) et constituant une butée d'arrêt et de positionnement d'une pile d'articles (3) relativement à l'ouverture (44) de passage au travers celle-ci des articles d'une pile.

10. Dispositif selon la revendication 9, **caractérisé en ce qu'**il comprend une cornière verticale (45) située en face de la paroi verticale (27) constituant le magasin (2) prolongeant la paroi verticale arquée de guidage (26) et montée pivotante relativement à la base de support (6) autour d'un axe vertical (46) entre une position dégagée permettant le transfert d'une pile d'articles dans le magasin (2) et une position d'engagement avec le coin de la pile d'articles situé du même côté que celui en appui sur l'ailette de butée (40) de façon à maintenir une pile d'articles en position centrée dans le magasin (2) relativement à l'ouverture de passage (44) des articles de la pile.

11. Dispositif selon la revendication 10, **caractérisé en ce que** la cornière verticale (45) est fixée au niveau de sa partie médiane, à l'extrémité d'un bras (47) parallèle à la barre de support (6), le bras (47) étant fixé sur l'extrémité supérieure d'un pied vertical de support (48) dont l'extrémité inférieure est solidaire d'une plaque (49) parallèle au bras (47) de la cornière (45), l'ensemble constitué par le bras (47), le pied de support (48) et la plaque (49) étant monté pivotant sur un arbre vertical (46) opposé à la cornière et solidaire de la base de support (6).

12. Dispositif selon la revendication 11, **caractérisé en ce que** le pivotement de la cornière verticale (45) est commandé par un vérin (47) dont la tige (47b) est reliée articulée à la plaque de support (49) du pied vertical (48) et le cylindre (47a) est fixé articulé à la base de support (6).

13. Dispositif selon l'une des revendications 8 à 12, **caractérisé en ce** les deux parois verticales (9, 10) du magasin (2) sont réglables en position relative sur la base de support (6) suivant la dimension des articles (3) à éjecter d'une pile.

14. Système de distribution automatique d'articles pour la préparation d'une ou plusieurs commandes de tels articles, comprenant un certain nombre de dispositifs de réception et d'éjection d'articles empilés dans des magasins (2) de ces dispositifs qui comprennent des éjecteurs (1) situés respectivement sous les magasins (2) pour éjecter de chaque magasin (2) chaque article le plus bas d'une pile correspondante d'articles et un convoyeur disposé sous les éjecteurs (1) pour collecter des articles délivrés par les éjecteurs (1) et les acheminer vers un emplacement de collecte, **caractérisé en ce que** chaque dispositif de réception et d'éjection d'articles empilés est tel que défini dans l'une quelconque des revendications 1 à 13.

15. Système selon la revendication 14, **caractérisé en ce que** les dispositifs de réception et d'éjection sont constitués par les modules amoviblement fixés côte à côte de façon interchangeable sur un châssis d'une chaîne de modules.

16. Système selon la revendication 15, **caractérisé en ce qu'**il comprend plusieurs tapis roulants horizontaux (28) en forme de bandes sans fin permettant d'alimenter en articles empilés (3) respectivement les dispositifs de réception et d'éjection de façon que chaque tapis roulant d'alimentation (28) achemine une succession de piles d'articles identiques (3) constituant une réserve d'articles empilés (3), dont la pile de tête vient en appui sur la pièce formant butée (29) du dispositif de réception et d'éjection correspondant, le déplacement du tapis d'alimentation (28) étant interrompu lors du transfert d'une pile d'articles dans le magasin (2) du dispositif de réception et d'éjection.

17. Système selon l'une des revendications 14 à 16, **caractérisé en ce qu'**il comprend un dispositif ordinateur permettant de sélectivement commander les éjecteurs (1) par l'intermédiaire d'une carte électronique associée respectivement aux dispositifs de réception et d'éjection pour éjecter des magasins correspondants (2) la quantité déterminée d'articles souhaités (3) suivant les commandes passées et mémorisées dans le dispositif ordinateur.

## Claims

1. A device for receiving and ejecting items stacked (3) in a hopper (2), comprising an ejector (1) located under the hopper (2) and controlled so as to eject from the hopper (2) each lowermost item of the stack of items, the device comprising furthermore a bar (25) connected to a driving mechanism controlled so as to have the bar (25) apply a pushing motion on one end of a stack of items on standby in a storage position on a flat horizontal supporting base (6) in order to transfer the stack of items (3) towards the hopper (2) along a curved guiding path, **characterized in that** it comprises a stopping part (29) holding a stack of items in a transfer standby position, pivotingly mounted on the supporting base (6) around a vertical pin (30) between an active position holding the stack of items (3) and an inactive position released from the stack of items (3) while the transfer bar (25) is transferring the stack of items towards the hopper (2), with a new stack of items (3) being routed on the stopping part (29) when the latter has been returned to the active position thereof.

2. The device according to claim 1, **characterized in that** said drive mechanism comprises a horizontal arm (22) pivoting at one end around a vertical pin and comprising near the opposite free end thereof the transfer bar (25) extending vertically towards the supporting base (6), the height of which is greater than the height of a stack of items (3) to be transferred.

3. The device according to claim 2, **characterized in that** the pivoting arm (22) is driven by a rotating hydraulic or pneumatic double-acting cylinder (23).

4. The device according to any of the preceding claims, **characterized in that** the stopping part (29) comprises two twin arms (32, 33) parallel to the supporting base (6), and having two of the ends thereof mounted pivotingly around the vertical pin (25), the opposite end of the lower arm (33) being connected to a member controlling the pivoting motion of the two twin arms (32, 33) between the active position wherein a stack of items is resting on two straight edges located on the same side of the two twin arms (32, 33) and an inactive position wherein the two straight edges of the two twin arms (32, 33) are disengaged from the stack of items before the transfer thereof towards the hopper (2).

5. The device according to claim 4, **characterized in that** the member for controlling the pivoting motion of the stopping part (29) is a cylinder (31) the rod (31b) of which is hingedly connected to the end of the lower arm (33), and the cylinder (31a) is fixed to a base plate (34) integral with the supporting base (6), the fulcrum pin (30) of the two twin arms (32, 33) being fixed to the base plate (34) opposite the cylinder rod (31b).

6. The device according to claim 4 or 5, **characterized in that** the two twin arms (32, 33) each have the shape of a curved flat plate of rectangular cross-section, so that the convex part of each arm is facing a stack of items (3), the straight edges of the two arms serving as a rest for a stack of items, which are those opposite the hinge pin (30).

7. The device according to any of the preceding claims, **characterized in that** it comprises a curved vertical wall (26) fixed to the basis of the support (6) and the concave face of which, oriented towards the transfer bar (25), allows for a stack of items (3) to be guided towards the hopper (2) along a curved path.

8. The device according to claim 7, **characterized in that** the curved vertical wall (26) is extended by a flat vertical wall (27) defining one of the walls (9, 10) of the hopper (2) for receiving a stack of items (3), the other wall (10) of the hopper (2) being defined by a vertical plate parallel to the flat wall (9) and spaced therefrom by a distance substantially equal to the width of each item (3) of the same stack, the supporting base (6) comprising an opening (44) located between the two walls (9, 10) of the hopper (2) and through which some of the items of a stack of items drop by gravity when the stack has been transferred into the hopper (2), so that the lowermost item rests on the ejector (1) which can be controlled for ejecting this lowermost item (3).

9. The device according to claim 8, **characterized in that** the vertical plate (10) defining the other wall of the hopper (2) comprises a vertical flap (40) secured perpendicularly to the vertical plate in the hopper (2) and forming a stop for blocking and positioning a stack of items (3) with respect to the luminal opening (44) therethrough, of the stack of items.

10. The device according to claim 9, **characterized in that** it comprises a vertical angle section (45) located facing the vertical wall (27) composing the hopper (2) extending the curved vertical guiding wall (26) and pivotingly mounted with respect to the supporting base (6) around a vertical pin (46) between a released position allowing for a stack of items to be transferred into the hopper (2) and a position engaged with the corner of the stack of items located on the same side as the one resting on the flap of the stop (4) so as to maintain the stack of items in a centered position in the hopper (2) with respect to the luminal opening (44) of the items of the stack.

11. The device according to claim 10, **characterized in that** the vertical angle section (45) is secured at the median portion thereof, to the end of an arm (47) parallel to the supporting bar (6), the arm (47) being secured to the upper end of a vertical supporting foot (48) the lower end of which is integral with a plate (49) parallel to the arm (47) of the angle section (45), the assembly composed of the arm (47), the supporting foot (48) and the plate (49) being mounted pivotingly on a vertical shaft (46) opposite the angle section and integral with the supporting base (6).

12. The device according to claim 11, **characterized in that** pivoting motion of the vertical angle section (45) is controlled by a cylinder (47) the rod of which (47b) is hingedly connected to the supporting plate (49) of the vertical foot (48), and the cylinder (47a) is hingedly secured to the supporting base (6).

13. The device according to any of claims 8 to 12, **characterized in that** the position of the two vertical walls (9, 10) of the hopper (2) can be adjusted with respect to the supporting base (6) according to the dimension of the items (3) to be ejected from a stack.

14. A system for automatically distributing items for the preparation of one or more orders of such items, comprising a number of devices for receiving and ejecting items stacked in hoppers (2) of the type of devices comprising ejectors (1) located respectively under the hoppers (2) for ejecting from each hopper (2) each lowermost item of a corresponding stack of items, and a conveyor arranged under the ejectors (1) for collecting items delivered by the ejectors (1) and routing them towards a collecting site, **characterized in that** each device for receiving and ejecting stacked items is as defined in any of claims 1 to 13.

15. The system according to claim 14, **characterized in that** the devices for receiving and ejecting are composed of modules removably secured side by side interchangeably on a frame of a line of modules.

16. The system according to claim 15, **characterized in that** it comprises several horizontal conveyor belts (28) in the form of continuous belts allowing stacked items (3) to be supplied respectively to the receiving and ejecting devices, so that each supplying conveyor belt (28) routes a series of stacks of identical items (3), the head stack of which is resting on the stopping part (29) of the corresponding receiving and ejecting device, the displacement of the supplying belt (28) being interrupted during the transfer of a stack of items into the hopper (2) of the receiving and ejecting device.

17. The system according to any of claims 14 to 16, **characterized in that** it comprises a computing device allowing for selective control of the ejectors (1) via an electronic board associated respectively with the receiving and ejecting devices for ejecting from corresponding hoppers (2) the determined quantity of desired items (3) according to orders placed and stored in the computing device.

## Patentansprüche

1. Vorrichtung zum Aufnehmen und Auswerfen von in einem Magazin (2) gestapelten Gegenständen (3), umfassend einen Auswerfer (1), der sich unter dem Magazin (2) befindet und gesteuert wird, um aus dem Magazin (2) den jeweils untersten Gegenstand des Stapels von Gegenständen auszuwerfen, wobei die Vorrichtung ferner einen Stab (25) umfasst, der mit einem Antriebsmechanismus verbunden ist, um den Stab (25) zu veranlassen, eine Schubbewegung auf ein Ende eines Stapels von Gegenständen, die sich in einer Lagerposition auf einer ebenen Tragfläche (6) in Bereitschaft befinden, auszuüben, um den Stapel von Gegenständen (3) an einer gekrümmten Leitbahn entlang zum Magazin (2) zu übertragen, **dadurch gekennzeichnet, dass** sie ein Anschlagteil (29) umfasst zum Festhalten eines Stapels von Gegenständen (3) in einer Übertragungsbereitschaftsposition, und das auf der Tragfläche (6) um einen senkrechten Bolzen (30) herum zwischen einer aktiven Position zum Festhalten des Stapels von Gegenständen (3) und einer inaktiven Position, die von dem Stapel von Gegenständen (3) gelöst ist, schwenkbar angebracht ist, während der Übertragungsstab (25) den Stapel von Gegenständen zum Magazin (2) überträgt, wobei ein neuer Stapel von Gegenständen (3) auf das Anschlagteil (29) befördert wird, nachdem dieses in seine aktive Position zurückgebracht wurde.

2. Vorrichtung nach Anspruch 1, **dadurch gekennzeichnet, dass** der Antriebsmechanismus einen waagerechten Stab (22) umfasst, der an einem Ende um einen senkrechten Bolzen schwenkbar ist und neben seinem freien gegenüberliegenden Ende den Übertragungsstab (25) umfasst, der sich senkrecht in Richtung auf die Tragfläche (6) erstreckt, deren Höhe größer ist als die Höhe eines zu übertragenden Stapels von Gegenständen (3).

3. Vorrichtung nach Anspruch 2, **dadurch gekennzeichnet, dass** der schwenkbare Arm (22) durch einen drehenden Hydraulik- oder Druckluft-Doppeleffektzylinder (23) angetrieben wird.

4. Vorrichtung nach einem der vorhergehenden Ansprüche, **dadurch gekennzeichnet, dass** das Anschlagteil (29) zwei Doppelarme (32, 33) umfasst, die parallel zur Tragfläche (6) sind und von denen zwei Enden um den senkrechten Bolzen (25) schwenkbar angebracht sind, wobei das gegenüberliegende Ende des unteren Arms (33) mit einem Element verbunden ist zum Steuern des Verschwenkens der beiden Doppelarme (32, 33) zwischen der aktiven Position, in der ein Stapel von Gegenständen sich auf zwei geradlinigen Kanten abstützt, die sich auf derselben Seite der beiden Doppelarme (32, 33) befinden, und einer inaktiven Position, in der die beiden geradlinigen Kanten der beiden Doppelarme (32, 33) von dem Stapel von Gegenständen gelöst sind, bevor dieser zum Magazin (2) übertragen wird.

5. Vorrichtung nach Anspruch 4, **dadurch gekennzeichnet, dass** das Element zum Steuern des Verschwenkens des Anschlagteils (29) ein Zylinder (31) ist, dessen Stange (31b) gelenkig mit dem Ende des unteren Arms (33) verbunden ist, und der Zylinder (31a) an einer Grundplatte (34) befestigt ist, die mit der Tragfläche (6) einstückig ist, wobei der Schwenkbolzen (30) der beiden Doppelarme (32, 33) an der Grundplatte (34) gegenüber der Zylinderstange (31b) befestigt ist.

6. Vorrichtung nach Anspruch 4 oder 5, **dadurch gekennzeichnet, dass** die beiden Doppelarme (32, 33) jeweils die Form einer gekrümmten ebenen Platte mit rechteckigem Querschnitt vorliegen, so dass der konvexe Teil jedes Arms einem Stapel von Gegenständen (3) gegenüberliegt, wobei die geradlinigen Kanten der beiden Arme als Auflage für einen Stapel von Gegenständen, welche diejenigen sind, die dem Gelenkbolzen (30) gegenüberliegen, dient.

7. Vorrichtung nach einem der vorhergehenden Ansprüche, **dadurch gekennzeichnet, dass** sie eine gekrümmte senkrechte Wand (26) umfasst, die an der Basis des Trägers (6) befestigt ist und deren konkave Seite, die zum Übertragungsstab (25) gewandt ist, das Führen eines Stapels von Gegenständen (3) entlang einer gekrümmten Bahn zum Magazin (2) hin ermöglicht.

8. Vorrichtung nach Anspruch 7, **dadurch gekennzeichnet, dass** die gekrümmte senkrechte Wand (26) durch eine ebene senkrechte Wand (27) verlängert wird, die eine der Wände (9, 10) des Magazins (2) zum Aufnehmen eines Stapels von Gegenständen (3) definiert, wobei die andere Wand (10) des Magazins (2) durch eine senkrechte Platte definiert wird, die zu der ebenen Wand (9) parallel ist und davon um einen Abstand entfernt ist, der im Wesentlichen gleich der Breite jedes Gegenstands (3) eines selben Stapels ist, wobei die Tragfläche (6) eine Öffnung (44) umfasst, die sich zwischen den beiden Wänden (9, 10) des Magazins befindet und durch die ein Teil der Gegenstände eines Stapels von Gegenständen unter Schwerkrafteinwirkung fällt, sobald der Stapel in das Magazin (2) übertragen worden ist, so dass der unterste Gegenstand auf dem Auswerfer (1) ruht, der zum Auswerfen dieses untersten Gegenstands (3) gesteuert werden kann.

9. Vorrichtung nach Anspruch 8, **dadurch gekennzeichnet, dass** die senkrechte Platte (10), welche die andere Wand des Magazins (2) definiert, einen senkrechten Flügel (40) umfasst, der rechtwinklig zu der senkrechten Platte in dem Magazin (2) befestigt ist und einen Anschlag bildet zum Arretieren und Positionieren eines Stapels von Gegenständen (3) im Verhältnis zur durch diese hindurchgehende Durchgangsöffnung (44) des Stapels von Gegenständen.

10. Vorrichtung nach Anspruch 9, **dadurch gekennzeichnet, dass** sie ein senkrechtes Winkeleisen (45) umfasst, das sich gegenüber der senkrechten Wand (27) befindet, die das Magazin (2) bildet, das die gekrümmte senkrechte Leitwand (26) verlängert und im Verhältnis zur Tragfläche (6) um einen senkrechten Bolzen (46) herum zwischen einer gelösten Position, welche die Übertragung eines Stapels von Gegenständen in das Magazin (2) ermöglicht, und einer Position in Eingriff mit der Ecke des Stapels von Gegenständen, der sich auf derselben Seite befindet wie derjenige, der auf dem Anschlagflügel (4) ruht, verschwenkbar ist, um einen Stapel von Gegenständen im Magazin (2) im Verhältnis zur Durchgangsöffnung (44) der Gegenstände des Stapels in einer zentrierten Position zu halten.

11. Vorrichtung nach Anspruch 10, **dadurch gekennzeichnet, dass** das senkrechte Winkeleisen (45) an seinem mittleren Abschnitt an dem Ende eines Arms (47) befestigt ist, der zum Tragstab (6) parallel ist, wobei der Arm (47) an dem oberen Ende eines senkrechten Tragfußes (48) befestigt ist, dessen unteres Ende mit einer Platte (49) einstückig ist, die zu dem Arm (47) des Winkeleisens (45) parallel ist, wobei die Anordnung, die aus dem Arm (47), dem Tragfuß (48) und der Platte (49) besteht, an einer senkrechten Welle (46), die gegenüber dem Winkeleisen liegt und mit der Tragfläche (6) einstückig ist, schwenkbar angebracht ist.

12. Vorrichtung nach Anspruch 11, **dadurch gekennzeichnet, dass** das Verschwenken des senkrechten Winkeleisens (45) durch einen Zylinder (47) gesteuert wird, dessen Stange (47b) gelenkig mit der Tragplatte (49) des senkrechten Fußes (48) verbunden ist, und der Zylinder (47a) gelenkig an der Tragfläche (6) befestigt ist.

13. Vorrichtung nach einem der Ansprüche 8 bis 12, **dadurch gekennzeichnet, dass** die Position der beiden senkrechten Wände (9, 10) des Magazins (2) im Verhältnis zur Tragfläche (6) gemäß der Größe der aus einem Stapel auszuwerfenden Gegenstände (3) eingestellt werden kann.

14. System zum automatischen Verteilen von Gegenständen zur Vorbereitung einer oder mehrerer Bestellungen solcher Gegenstände, umfassend eine Anzahl von Vorrichtungen zum Aufnehmen und Auswerfen von Gegenständen, die in Magazinen (2) gestapelt sind, von der Art von Vorrichtungen, die Auswerfer (1) umfassen, die jeweils unter den Magazinen (2) angeordnet sind, um aus jedem Magazin (2) den jeweils untersten Gegenstand eines entsprechenden Stapels von Gegenständen auszuwerfen, und einen Förderer, der unter den Auswerfern (1) angeordnet ist, um Gegenstände zu sammeln, die von den Auswerfern (1) verteilt werden, und sie zu einem Sammelplatz zu befördern, **dadurch gekennzeichnet, dass** jede Vorrichtung zum Aufnehmen und Auswerfen gestapelter Gegenstände sich wie in einem der Ansprüche 1 bis 13 definiert gestaltet.

15. System nach Anspruch 14, **dadurch gekennzeichnet, dass** die Vorrichtungen zum Aufnehmen und Auswerfen aus Modulen bestehen, die abnehmbar nebeneinander auf einem Rahmen einer Reihe von Modulen austauschbar angeordnet sind.

16. System nach Anspruch 15, **dadurch gekennzeichnet, dass** es mehrere waagerechte Förderbänder (28) als Laufriemen umfasst, welche die Zulieferung von gestapelten Gegenständen (3) jeweils zu den Aufnahme- und Auswurfvorrichtungen ermöglichen, so dass jedes Zuführförderband (28) eine Folge von Stapeln identischer Gegenständen (3) befördert, die einen Vorrat von gestapelten Gegenständen (3) bilden, von denen der Anfangsstapel auf dem Anschlagteil (29) der entsprechenden Aufnahme- und Auswurfvorrichtung ruht, wobei die Bewegung des Zuführbands (28) während der Übertragung eines Stapels von Gegenständen in das Magazin (2) der Aufnahme- und Auswurfvorrichtung unterbrochen wird.

17. System nach einem der Ansprüche 14 bis 16, **dadurch gekennzeichnet, dass** es eine Computervorrichtung umfasst, die eine wahlweise Steuerung der Auswerfer (1) über eine elektronische Karte ermöglicht, die jeweils mit den Aufnahme- und Auswurfvorrichtungen verbunden ist, um aus entsprechenden Magazinen (2) die bestimmte Menge erwünschter Gegenstände (3) gemäß den aufgegebenen und in der Computervorrichtung gespeicherten Bestellungen ermöglicht.
